Europäisches Patentamt

European Patent Office

Office européen des brevets

(11) Publication number: **0 208 026**
A2

## (12) EUROPEAN PATENT APPLICATION

(21) Application number: 85303641.6

(22) Date of filing: 23.05.85

(51) Int. Cl.⁴: **A 01 D 34/16**
**A 01 D 34/18**

(30) Priority: 06.11.84 US 668745

(43) Date of publication of application:
14.01.87 Bulletin 87/3

(84) Designated Contracting States:
AT BE CH DE FR GB IT LI LU NL SE

(71) Applicant: NATIONAL-STANDARD COMPANY
1618 Terminal Road
Niles Michigan 49120(US)

(72) Inventor: Johnson, Morris V.
50720 Woodbury Way
Granger Indiana 46530(US)

(74) Representative: Newby, Martin John et al,
J.Y. & G.W. Johnson Furnival House 14-18 High Holborn
London WC1V 6DE(GB)

(54) Adjustable sickle guard assembly.

(57) An adjustable sickle guard assembly includes upper and lower guard members mounted to the frame of a cutting implement, with each guard member having at least one forwardly directed guard time. The upper and lower guard members each include complementary, facing recessed portions into which a laterally displaceable sickle bar is positioned. A horizontal slot is also provided between the upper and lower guard members immediately forward of the recessed portion within which a reciprocating sickle section mounted to the sickle bar is confined. The upper lateral edges of the lower guard tine form cutting surfaces with the reciprocating sickle section. The upper guard member is pivotally mounted to the cutting implement frame in an adjustable manner and is capable of controlling the displacement between the sickle section and the lower guard tine. Thus, the cutting action between the sickle section and the lower guard member may be adjusted to compensate for various operating conditions including cutting edge wear. In another embodiment, the reciprocating sickle section is confined within a pair of parallel, laterally aligned slots between adjacent upper and lower guard members formed from a single work piece. The upper and lower guard members are coupled at a forward portion of the sickle guard assembly and form a single, integrated forward extending guard tine. An adjustable hold down assembly pivotally mounted to the cutting implement's frame abuts an upper surface of the sickle section permitting the cutting action between it and the lower guard members to be adjusted as the cutting edges wear.

./...

FIG-1

# ADJUSTABLE SICKLE GUARD ASSEMBLY

## BACKGROUND OF THE INVENTION

The present invention relates to an improved sickle guard assembly and more precisely to an adjustable sickle guard assembly having an adjustable upper guard member which precisely controls the gap or distance between the upper and lower guard members to optimize the cutting action of the reciprocating sickle section therebetween.

In the past, sickle guards have been disclosed which include upper and lower guard members which are mounted to the frame of a cutting implement, with both members extending forward to define a gap or horizontal slot therebetween. The horizontal slot or gap confines and defines the path of travel of the reciprocating sickle section and provides the optimum cutting action between the reciprocating sickle sections and the lower guard member. See, for example, United States Patent No. 3,553,948. However, in such known sickle guard assemblies, the wear and abrasion which occurs between the reciprocating sickle sections and the upper and lower guard members during usage of such prior art assemblies results in an increase in the depth or distance of the gap or horizontal slot between the upper and lower guard members. The resultant increased gap depth substantially diminishes the cutting action between the reciprocating sickle section and the lower guard member and requires early replacement of the guard assembly, even though the guard assembly may be only slightly worn.

## SUMMARY OF THE INVENTION

Accordingly, it is an object of the present invention to providee an adjustable sickle guard assembly which substantially increases the useful lifetime and cutting efficiency of a sickle guard assembly.

In one embodiment of the present invention, the sickle guard assembly includes a lower guard member comprised of an integral body portion, preferably, having a pair of horizontally spaced apart longitudinally extending guard fingers or tines tapered toward the forward ends thereof. The integral body portion includes a recess thereacross which is adapted to receive a sickle bar to which the sickle sections are mounted, as is well known in the art. The sickle sections are positioned to cooperate with an upper ledger or cutting surface on the longitudinally extending guard finger or tine of the lower guard member. The rear end portion of the integral body portion of the guard assembly includes openings therein which cooperate with fastening means to firmly mount the sickle guard assembly to the frame or common bar of the particular cutting implement to which the sickle guard assembly is mounted.

The sickle guard assembly in accordance with this embodiment of the present invention further includes an upper guard member is, preferably, comprised of an integral body portion having a pair of horizontally spaced apart longitudinally extending guard fingers or tines tapered toward the forward ends. However, the upper guard member may have only one or more guard tines. The integral body portion of the upper member includes an arcuate shaped rear end portion having threaded openings therein which are adapted to receive plastic self-locking bolts or threaded screws having lock nuts thereon or other adjustably self-locking means which provide the adjustable feature of the sickle guard assembly. Preferably, the adjustable self-locking means is a steel bolt having plastic inserts therein which cause interference with the threads and which provide the self-locking feature. Additionally, the body portion of the longitudinally extending guard fingers or tines of the upper guard member include a lower ledger or cutting surface thereon which cooperates with the reciprocating sickle sections to retain the same in cutting relationship with the upper cutting surface on the lower guard member. The rear end portion of the integral body portion of the upper member includes pivot projections thereon and a pair of openings therein, which openings cooperate with fastening means to firmly mount the sickle guard assembly to the frame or common bar of the particular implement to which the assembly is mounted, as is known in the art.

The upper guard member of the sickle assembly is structurally designed such that upon the firm attachment of the lower and upper guard members to the frame of the cutting implement, the lower cutting surface on the upper longitudinally extending guard fingers is engaged to the frame of the cutting implement, and drawn into firm contact and engagement with the sickle sections between the upper and lower guard members. Thereafter, the adjustable self-locking means is turned inwardly such that the locking means firmly engages the frame of the cutting implement. Upon further tightening or turning of the adjustable self-locking means inwardly, the forward ends of the longitudinally extending guard fingers of the upper guard member are pivoted or biased away from the sickle sections, by reason of the upper guard member pivoting about the point where the projection member engages the frame of the cutting implement, until a predetermined and desired gap is achieved therebetween, which gap insures optimum cutting action between the sickle sections and the upper cutting surface of the lower member.

During operation of the adjustable sickle guard assembly, when excessive wear occurs between the sickle sections and the ledger surfaces, thereby resulting in substantially reduced cutting efficiency or action therebetween, while the guards are firmly attached to the frame of the implement the adjustable self-locking means is turned outwardly, thereby permitting the springing or flexing action of the fixedly mounted upper guard member and the longitudinally extending tines and the lower cutting surfaces thereon to pivot downwardly toward the sickle sections to maintain the predetermined and desired gap therebetween and to provide optimum cutting action between the sickle sections and the upper cutting surface of the lower member.

In a further embodiment of the present invention the adjustable sickle guard assembly includes a guard member having a lower integral body portion having, preferably, a pair of horizontally spaced apart longitudinally extending guard tines tapered toward the forward ends. In the fabrication of the guard member, an upper body portion is integral to the lower body portion and is fabricated to provide horizontal slots therebetween which slots are designed to receive the sickle sections of the sickle assembly. The lower body portion includes a recess thereacross which recess is adapted to receive the sickle bar to which the sickle sections are mounted, as is known in the art. The sickle sections are positioned to cooperate with the upper ledger or cutting surface on the lower body portion and, with the sickle sections adapted to reciprocate back and forth within the horizontal slots, defined by the longitudinally extending upper and lower body portions. The rear end portion of the lower integral body portion includes openings therein, which openings cooperate with fastening means to firmly mount the sickle guard assembly to the frame or common bar of the particular cutting implement, as is known in the art.

The adjustable sickle guard assembly further includes a T-shaped adjustable guard clip member having an integral body portion with a central horizontal spaced apart longitudinally extending guard finger tapered toward the forward end thereof. The central extending guard finger may include lower abrasive wear surface sections thereon, which sections engage the sickle section to firmly retain the reciprocating sickle sections in engagement with the upper cutting surface of the lower integral body portion of the guard member. The rear portion of the integral body portion of the T-shaped guard clip member includes a pivot projection thereon and a pair of openings therein, which openings cooperate with the openings in the lower sickle guard integral body portion of the lower guard member to firmly retain the guard assembly to a common bar of the cutting implement. Additionally, centrally located on the rear portion of the adjustable upper guard clip member is a threaded opening which is adapted to receive plastic self-locking bolts or threaded screws having lock nuts thereon or other adjustable self-locking means, which, when turned inwardly, engages the frame or common bar of the cutting implement.

Upon the firm attachment of the guard member and the guard clip member by fastening the same to the cutting implement through the openings in the rear end portion of the lower integral body portion of the guard member and the rear portion of the T-shaped clip member, the central forward end of the adjustable guard clip member is locked in engaging position with the sickle sections. The adjustable self-locking means is turned inwardly and the central extending guard finger is pivoted away by the springing or flexing action thereof from the sickle sections until a predetermined and desired gap is achieved between the reciprocating sickle sections and the upper ledger surface on the guard member to provide an optimum cutting action therebetween. The T-shaped clip member pivots about the contact point between the pivot projection and the common bar of the cutting implement. Upon usage and wear between the sickle sections and the upper cutting surface, the self-locking means in the clip member may be withdrawn slightly to again firmly engage the central extending guard finger by the springing action therein with the sickle sections to maintain the optimum cutting action between the reciprocating sickle sections and the upper cutting surfaces of the guard tines.

In a modified form of this second embodiment, the rear portion of body portion of the T-shaped guard clip member may include a diagonal extending integral extension thereto, which extension member includes an opening therein which opening is adapted to receive a locking means. This T-shaped clip member is adapted to be attached to a cutting implement having a frame or common bar which includes a diagonal member adjacent to the planar common bar. Upon the firm attachment of the guard member and the guard clip member to the cutting implement, the adjustable self-locking means is turned inwardly and the clip member is pivoted about the point contact form to engage the sickle sections to properly maintain the cutting efficiency and cutting action between the reciprocating sickle sections and the upper cutting surfaces of the guard tines. In such an embodiment, the adjustment action is such that the inward turning or movement of the self-locking means pivots the central extending member of the locking member downwardly to engage the reciprocating section to maintain the proper cutting efficiency of the guard assembly.

## DESCRIPTION OF THE DRAWINGS

FIG. 1 is a top plan view of one embodiment of the adjustable sickle guard assembly in accordance with the present invention in which double tine sickle guards are disposed and mounted in a conventional manner on a cutting implement having a conventional sickle for effecting a cutting operation by reciprocation of the sickle;

FIG. 2 is a cross-sectional view taken substantially along the line 2-2 of FIG. 1 looking in the direction indicated by the arrows;

FIG. 3 is an exploded perspective view of the embodiment of the adjustable sickle guard assembly as shown in FIG. 1;

FIG. 4 is a top plan of another embodiment of the adjustable sickle guard assembly in accordance with the present invention in which double tined sickle guards are mounted in a conventional manner on a cutting implement having a conventional sickle for effecting a cutting operation by reciprocation of the sickle;

FIG. 5 is a cross-sectional view taken substantially along line 5-5 of FIG. 4 looking in the direction indicated by the arrows; and

FIG. 6 is a cross-sectional view of a further embodiment of mounting the adjustable sickle guard assembly to a cutting implement having a modified frame mounting member.

## DETAILED DESCRIPTION

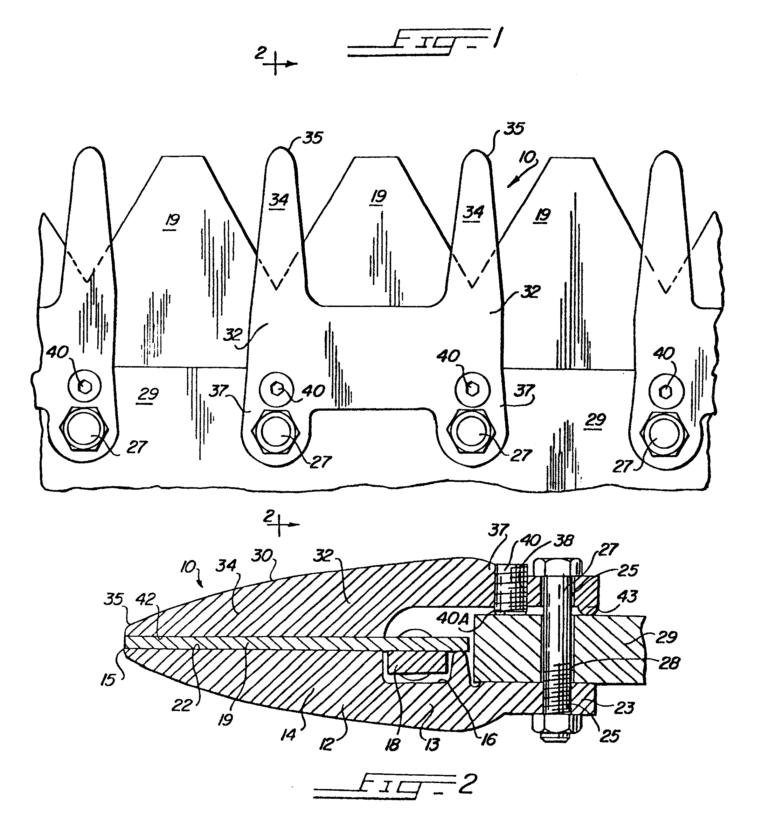

Referring now to the drawings wherein like numerals have been used throughout the several views to designate the same or similar parts, there is shown in FIGS. 1-3 an adjustable sickle guard assembly 10 which includes a lower guard member 12 comprised of an integral body portion 13 having, in the particular embodiment shown, a pair of horizontally spaced apart longitudinally extending guard tines 14 tapered toward the forward ends 15. The integral body portion 13 includes a recess 16 therein which recess is adapted to receive a sickle bar 18 (FIG. 2) to which the sickle sections 19 are mounted, as is well known in the art.

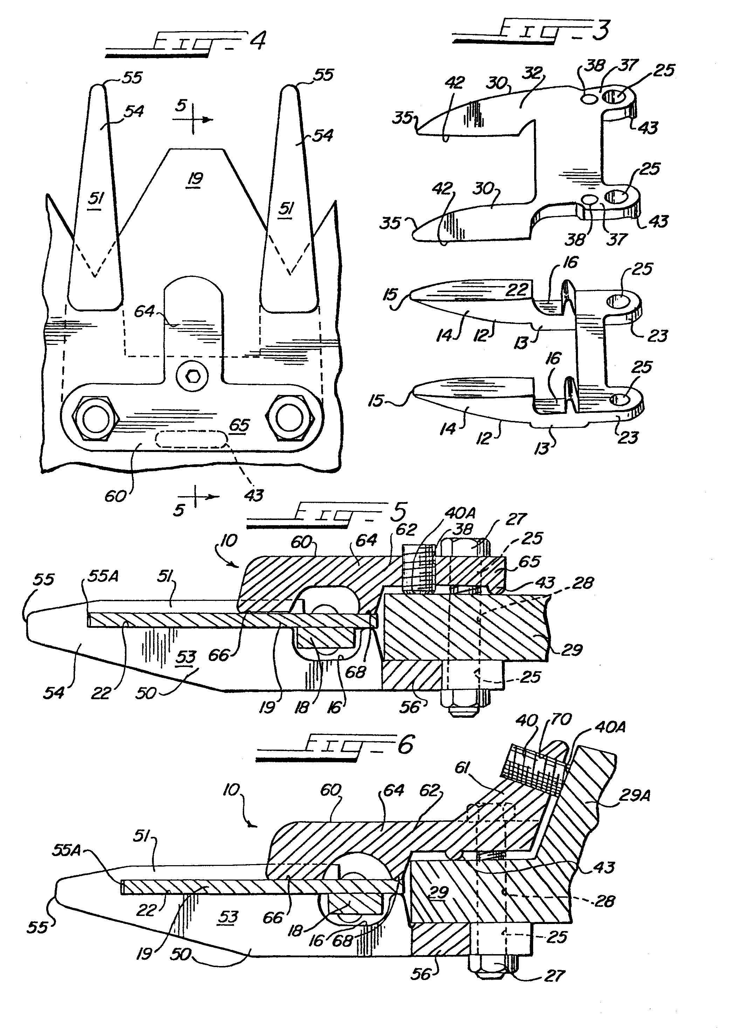

The sickle sections 19 are designed to reciprocally cooperate with an upper ledger or cutting surface 22 on the lower guard member 12. The rear end portion 23 of the integral body portion 13 includes openings 25 (FIG. 3) therein which cooperate with bolts or other fastening means 27 to firmly mount the adjustable sickle guard assembly 10 to the frame or common bar 29 of the particular cutting implement, as will hereinafter be described and as shown in FIG. 2.

As shown in FIGS 1-3, the adjustable sickle guard assembly 10 further includes an upper hold down or guard member 30 comprised of an integral body portion 32 having, in the particular embodiment shown, a pair of horizontally spaced apart and longitudinally extending guard tines 34 tapered toward the forward ends 35. As shown in FIG. 2, the forward ends 35 extend as far as the forward ends 15 of the lower guard member 12. However, in practice it is not necessary that forward end 35 extend as far as end 15 of the lower guard member. The integral body portion 32 of the upper member 30 includes an arcuate shaped rear end portion 37 which includes openings 25 therein which, when aligned with openings 25 in the rear end portion 23 of the integral body portion 13, cooperate with bolts or fastening means 27 to firmly mount the lower guard member 12 and the upper guard member 30 to the frame or common bar 19 of the cutting implement, the position as shown in FIG. 2.

The arcuate shaped rear end portion 37 includes also a pair of threaded openings 38 therein which are adapted to receive adjustable plastic self-locking bolts or threaded screws having lock nuts thereon or other adjustable self-locking means 40 which provide the adjustable feature of the sickle guard assembly 10, as will hereinafter be described. The integral body portion 32 of the upper guard member 30 includes also a lower ledger cutting surface 42 thereon, which defines a horizontal slot between the upper ledger cutting surface 22 and the lower ledger surface 42, and which cooperate with the reciprocating sickle sections 19 to retain the same in cutting relationship with the upper cutting surface 22 of the lower guard member 12. The arcuate shaped rear end portion 37 of the upper guard member includes a projection member 43 extending downwardly therefrom which member provides a pivot point for the upper adjustable guard member 30, as will hereinafter be described.

Upon the firm attachment of the upper and lower guard assemblies to the frame or common bar 29 by inserting and tightening the fastening means 27 through openings 25 in the lower and upper guard members and the openings 28 in the common bar 29 to firmly attach the assembly to the cutting implement, the lower cutting surface 42 of the upper guard member 30 is drawn into firm contact with the sickle sections 19, as shown in FIG. 3. Thereafter, the adjustable self-locking means 40 is turned inwardly such that the end 40A thereof engages the common bar 29. Upon further inward turning of the self-locking means 40, the forward ends 35 of the upper guard member 30 are pivoted away from the sickle sections 19 until the predetermined and desired gap or horizontal slot is achieved therebetween to provide optimum cutting action between the sickle sections 19 and the upper cutting surface 22 of the lower member 12. The upper guard member 30 is thus firmly retained by fastening bolt 27 and by engagement of the self-locking means 40 and the projection member 43 engaging the common bar 29.

During operation of the adjustable sickle guard assembly 10, when excessive wear occurs between the sickle sections 19 and the upper ledger cutting surface 22 of the lower guard member 12, thereby resulting in substantially reduced cutting efficiency or action, the adjustable locking means 40 is turned outwardly. Because the fastening bolt 27 tends to retain the assembly in a planar configuration, the outward turning of the self-locking means 40 thereby pivots and biases the forward ends 35 of the upper guard member 30 and the lower cutting surface 42 thereon toward the sickle sections 19 to precisely maintain the predetermined and desired horizontal slot or gap between the upper and lower guard members and to provide optimum cutting action between the sickle sections 19 and the upper cutting surface 22 of the lower member 12, the position as shown in FIG. 3.

In a further embodiment of the present invention as shown in FIGS. 4 and 5, the adjustable sickle guard assembly 10 includes a guard member 50 having a lower integral body portion 53 having, preferably, a pair of horizontally spaced apart longitudinally extending guard tines 54 tapered toward the forward ends 55. In the fabrication of the guard member 50, an upper body portion 51 is integral to the lower body portion 53 and is fabricated to provide horizontal slots 55A therebetween, which slots are designed to receive the sickle sections 19 of the sickle assembly. The lower body portion 53 includes a recess 56 thereacross, which recess is adapted to receive the sickle bar 18 to which the sickle sections 19 are mounted, as is known in the art. The sickle sections 19 are positioned to cooperate with an upper ledger or cutting surface 22 on the lower body portion 53 and, with the sickle sections adapted to reciprocate back and forth within the horizontal slots 55A, defined by the longitudinally extending upper and lower body portions. The rear end portion 56 of the lower integral body portion 53 includes openings 25 therein which openings cooperate with fastening means to firmly mount the sickle guard assembly to the frame or common bar 29 of the particular cutting implement, as is known in the art and which is shown by dotted lines in FIG. 5.

The adjustable sickle guard assembly 10 further includes a T-shaped adjustable hold down or guard clip member 60 comprised of an integral body portion 62 having, in the particular embodiment shown in FIGS. 4 and 5, a central horizontal spaced apart longitudinally extending guard member 64 tapered toward the forward end thereof. The central extending guard finger 64 may include lower abrasive wear surface sections, 66 and 68 thereon (FIG. 5), which sections engage the sickle sections 19 to firmly retain the reciprocating sickle sections in engagement with the upper cutting surface 22 of the lower integral body portion 53 of the guard member 50 and prevent rotational movement of the sickle sections about their centroid. The rear portion 65 of the integral body portion 62 of the T-shaped guard clip member 60 includes a pivot projection member 43 thereon and a pair of openings 25 therein, which openings cooperate with the openings 25 in the lower body portion 53 of the lower guard member 50 to firmly retain the guard assembly to a common bar 29 of the cutting implement. Additionally, centrally located on the rear portion of the adjustable upper guard clip member is a threaded opening which is adapted to receive plastic self-locking bolts or threaded screws having lock nuts thereon or other adjustable self-locking means 40, which, when turned inwardly, engages the frame or common bar 29 of the cutting implement.

Upon the firm attachment of the guard member 50 and the T-shaped guard clip member 60 by fastening the same to the cutting implement through the openings 25 in the rear end portion of the lower integral body portion 53 of the guard member 50 and the rear portion 65 of the T-shaped clip member 60, the central forwarding extending guard member 64 is locked in engaging positon with the sickle sections 19. The adjustable self-locking means 40 is tightened inwardly and the central extending guard finger 64 by reason of a springing or flexing action therein is pivoted away from the sickle sections 19 until a predetermined and desired gap is achieved between the reciprocating sickle sections 19 and the upper ledger surface 22 on the guard member 50 to provide an optimum cutting action therebetween. The T-shaped clip member 60 pivots about the contact point between the pivot projection member 43 and the common bar 29 of the cutting implement. Upon usage and wear between the sickle sections and the upper cutting surface 22, the self-locking means 40 in the clip member 60 may be withdrawn slightly to again firmly engage the central extending guard finger 64 by reason of its springing action and wear sections 66 and 68 thereon with the sickle sections 19 to maintain the optimum cutting action between the reciprocating sickle sections 19 and the upper cutting surfaces 22 of the guard member 50 and prevent rotational movement of the sickle sections 19 about this centroid.

In a modified form of this second embodiment, the rear portion 65 of body portion 62 of the T-shaped guard clip member 60 may include a diagonally extending integral extension member 61 thereto, which extension member includes an opening 70 therein which opening is adapted to receive a locking means 40. This T-shaped clip member is adapted to be attached to a cutting implement having a frame or common bar which includes a diagonal member 29A adjacent to the planar common bar 29. Upon the firm attachment of the guard member 50 and the guard clip member 60 to the cutting implement, the adjustable self-locking means 40 is turned inwardly and the clip member 60 is pivoted about the contact point wherein the projection member 43 engages the common bar 29. This movement properly maintains the cutting efficiency and cutting action between the reciprocating sickle sections 19 and the upper cutting surfaces 22 of the guard member 50. In such an embodiment, the adjustment action is such that the inward turning or movement of the self-locking means 40 pivots the central forward extending member 64 of the clip 60 downwardly to permit the wear sections 66 and 68 thereon to engage the reciprocating sickle sections 19 to maintain the proper cutting efficiency of the guard assembly.

The above described adjustable sickle guard assembly provides for a novel sickle guard assembly possessing substantially increased lifetime of usage with improved cutting efficiency over the entire lifetime of the guard assembly.

Thus, while I have illustrated and described the preferred embodiment of my invention, it is to be understood that this is capable of variation and modification, and I, therefore, do not wish to be limited to the precise details set forth, but desire to avail myself of such changes and alterations as fall within the purview of the following claims.

CLAIMS

1. A two-piece sickle guard assembly (10) for mounting to the frame of a cutting implement for use with reciprocating sickle sections (19) therein, including in combination:

a lower guard member (12) having at least one longitudinally extending guard tine (14) having an upper surface (22) thereof presenting a ledger surface for cooperating with the reciprocating sickle sections (19) to provide a cutting action therebetween,

an upper hold down guard member (30) mounted on said lower guard member (12) and having at least one longitudinally extending guard tine (34) with respect to said lower guard member tine (14) and wherein the lower surface (42) of said upper guard member tine (34) presents an upper surface to control the gap distance between said ledger surface (22) of said lower guard member (12) and the sickle sections (19), with the lower surface (42) of said upper guard member and ledger surface (22) of said lower guard member defining a horizontal slot for confining the path of travel of the recriprocating sickle sections (19), said upper hold down guard member (30) possessing a springing action therein,

fastening means (27) for rigidly mounting said sickle guard assembly (10) to the frame of the cutting implement and for engaging said upper hold down guard member (30) in restricting the displacement thereof from said lower guard member (12) in maintaining said gap distance therebetween,

said upper hold down guard member (30) includes adjustment means (40) positioned forwardly of said fastening means (27) and engaging the frame of the cutting implement to predeterminedly control said springing action of said upper hold down guard member (30) when said fastening means (27) has rigidly mounted said sickle guard assembly (10) to said cutting implement frame and to maintain the gap distance to optimize the cutting action between the reciprocating sickle sections (19) and ledger surface (22) of said lower guard member (12).

2. The sickle guard assembly (10) in accordance with claim 1 wherein said upper hold down guard member (30) includes projection means (43) thereon, which projection means (43) is engageable with the frame of the cutting implement to provide a pivot point for said upper hold down guard member (30) to permit control of the gap distance between said ledger surface (22) of said lower guard member (12) and the sickle sections (19).

3. The sickle guard assembly (10) in accordance with claim 2 wherein said upper hold down member (60) has at least two wear sections (66,68) which are case hardened.

4. The sickle guard assembly (10) in accordance with claim 3 wherein said upper hold down member (60) includes projection means (43) positioned forwardly of the position where said fastening means (27) mounts said lower guard member (12) and said upper hold down member (60) to the frame of the cutting implement, which projection means (43) is engageable with the frame of the cutting implement.

5. The sickle guard assembly (10) in accordance with claim 2 wherein said adjustment locking means (40) is a plastic self-locking bolt which is engageable with the frame of the cutting implement to predeterminedly control the gap distance.

6. The sickle guard assembly (10) in accordance with claim 3 wherein said upper hold down clip member (30) projection means (43) is positioned thereon rearwardly of said fastening means, which projection means (43) is engageable with the frame of the cutting implement to provide a pivot point for said upper hold down clip member (30).

7. The sickle guard assembly (10) in accordance with claim 2 wherein said upper hold down member (60) projection means (43) is positioned forwardly of the position where said fastening means (27) mounts said guard member and said upper hold down member (30) to the frame of the cutting implement, which projection means (43) is engageable with the frame of the cutting implement.

8. A sickle guard assembly (10) for mounting to the frame of a cutting implement comprised of a lower guard member (12) having at least one longitudinally extending tine (14) with the ledger surface (22) thereof presenting a cutting surface and an upper hold down member (30) having at least one longitudinally extending tine (34) possessing a springing action therein with the lower surface (42) presenting a contacting surface, with the lower guard member (12) and upper guard member defining a horizontal slot (55A) therebetween when said members are fixedly and rigidly mounted to the frame of the cutting implement by a fastening means (27) to control the gap distance and to provide a cutting action between the reciprocating sickle sections (19) and the ledger surface (22) of the lower guard member (12), the improvement comprising, an adjustable means (40) mounted in the upper hold down clip member (30) forwardly of the fastening means (27) and engageable with the frame of the cutting implement to predeterminedly control the springing action of the upper hold down member tine (34) and contacting surface thereon and maintain the gap distance between the sickle sections (19) and lower guard ledger surface (22) to optimize the cutting action between the reciprocating sickle sections (19) and the cutting surface (22) of the lower guard member (12) when the lower guard member (12) and upper guard member (30) are rigidly mounted to the frame of the cutting implement by the fastening means (27).

9. The sickle guard assembly (10) in accordance with claim 8 wherein said adjustable means (40) is a plastic self-locking bolt which is engageable with the frame of the cutting implement to predeterminedly control the gap distance between the upper ledger surface (22) of the lower guard member (12) and the reciprocating sickle sections (19).

10. The sickle guard assembly (10) in accordance with claim 8 wherein the upper hold down member (60)

-16-

includes projection means (43) thereon, which projection means (43) is engageable with the frame of the cutting implement to provide a pivot point for said springing action of said upper hold down member (60) to permit control of the gap distance between said ledger surface (22) of said lower guard member (12) and said reciprocating sickle sections (19).

11. The sickle guard assembly (10) in accordance with claim 9 wherein said upper hold down member (30) includes threaded openings (38) therein adapted to receive said plastic self-locking bolt (40) to permit control of the gap distance.

12. A sickle guard assembly (10) for mounting to the frame of a cutting implement and for use with reciprocating sickle sections (19) mounted on a section bar (18), including in combination:

a guard member (50) having at least one longitudinally extending guard tine (54) including an upper body portion (51) and a lower body portion (53) in spaced relation so as to define a horizontal slot (55A) therebetween and having a cutting surface (22) thereon for cooperation with the reciprocating sickle sections (19), said guard member (50) mounted to the frame of a cutting implement,

a hold down clip member (60) mounted on the frame of the cutting implement, said clip member (60) including at least one longtidunally extending guard tine (64) possessing a springing action with the lower surface thereof having at least two wear sections (66,68) thereon which engage the reciprocating sickle sections (19) one forwardly of the section bar (18) and one rearwardly of the section bar (18) to maintain the desired gap distance between the sickle sections (19) on said cutting surface (22) on said guard member (50) and prevent rotational movement of the sickle sections (19) about their centroid,

fastening means (27) for rigidly mounting said guard member and said hold down clip member (60) to the frame of a cutting implement and for preventing the displacement of said hold down clip member (60) from said guard member (50) whereby said reciprocating sickle sections (19) are maintained in proper spacing from said cutting surfaces (22) for optimum cutting action therebetween; and adjustment locking means (40) mounted in said clip member (60) and engageable with the frame of the cutting implement to predeterminedly control the springing action of said at least one longitudinal extending guard tine (64) of said clip member (60) in engagement with said reciprocating sickle sections (19) when said fastening means (27) has rigidly mounted said guard member (50) and said upper hold down clip member (60) to the frame of the cutting implement to optimize the cutting action between the reciprocating sickle sections (19) and said cutting surfaces on said guard member (50).

Fig. 1

Fig. 2

0208026

2/2

FIG-4

FIG-3

FIG-5

FIG-6